# EUROPEAN PATENT SPECIFICATION

(11) **EP 1 377 868 B1**
(45) Date of publication and mention of the grant of the patent: **25.05.2005**
(21) Application number: 02725441.6
(22) Date of filing: 29.03.2002
(51) Int. Cl.: G02B 26/08

(54) **METHOD AND APPARATUS FOR ORIENTING A SURFACE**
VERFAHREN UND VORRICHTUNG ZUR OBERFLÄCHENORIENTIERUNG
PROCEDE ET DISPOSITIF D'ORIENTATION D'UNE SURFACE

(30) Priority: 30.03.2001 US 280232 P; 13.02.2002 US 75940; 13.02.2002 US 75946; 13.02.2002 US 75930
(43) Date of publication of application: 07.01.2004
(73) Proprietor: GSI Lumonics Corporation, Billerica, MA 01821 (US)
(72) Inventor: BROWN, David, C., Northborough, MA 01532 (US); STUKALIN, Felix, Framingham, MA 01701 (US); NUSSBAUM, Michael, B., Newton, MA 02464 (US)
(74) Representative: Hammond, Andrew David
(86) International application number: PCT/US2002/009940
(87) International publication number: WO 2002/079854

(56) References cited:
- EP-A- 0 916 983
- EP-A- 0 916 984
- US-A1- 2001 017 665
- US-B1- 6 188 502

## Description

This application relates and claims priority for all purposes to U.S. Provisional Application serial no. 60/280232, filed March 30, 2001, and related pending U.S. applications entitled, Apparatus for Controlled Movement of an Element, application serial no. 10/075940, Free Space Optical Switch, application serial no. 10/075946, and Method and Apparatus for Beam Deflection, application serial No. 10/075930, each filed on February 13, 2002 and commonly assigned herewith.

### FIELD OF INVENTION

The present invention relates to an apparatus for controllably orienting a surface in one or two axes and for magnetically clamping the surface in a fixed orientation without the need for electrical power. In particular, the invention provides a radiation beam scanning or deflecting device when the surface is a reflecting surface and the orientation of the surface is controllable for directing an optical beam incident onto the reflective surface in a desired direction.

### BACKGROUND OF THE INVENTION

It is known to scan a radiation beam over an area using a two-axis scanning device. One example is shown in US 5,150,249, to Montagu, which depicts a two-dimensional scanner for scanning a radiation beam over a two dimensional area. According to the teaching of Montagu, two scan mirrors are pivoted through small deflection angles (less than 180 degrees) about mutually perpendicular axes by oscillating partial rotation motors such as galvanometers or resonantly driven partial rotation devices. A motor driver, which usually receives angular position and velocity signals from transducer associated with the motor, separately controls each motor to servo control the mirror motion for high frequency oscillation. It is a problem with the Montagu system that it has heretofore been difficult to miniaturize. It is also a problem with the Montagu system that the scan mirrors distort at high frequency oscillation, thereby degrading the quality of the radiation beam. Since two mirrors are used, distortion of each mirror contributes to the beam quality degradation. It is yet another problem with the Montague scanner that a precise alignment between the rotational axes of the mirrors may be required to achieve certain geometric accuracy in the scan.

Other two axis scanning systems are known that utilize only a single mirror. In fiber-optic communications systems, optical switching devices are used for redirecting radiation beams between fiber optic channels. One example of a miniaturized two-axis scanning apparatus is taught by Aksyuk et al. in US 6,300,619 which describes micro machine elements or MEM's usable for optical switching applications. In Aksyuk et al. a miniature optical device e.g. a mirror is supported by springs for movement with respect to an electro-mechanical structure. Both the electro-mechanical structure and the mirror are formed over a silicone substrate by applying multiple planar material layers onto the silicon substrate by photolithographic techniques. The deflecting or scanning mirror is formed as a 0.5 µm thick layer of Cr/Au with dimensions of 300X300 µm. Electrodes for actuating the mirrors are formed on the silicon substrate on a layer underlying the mirror element and are used to electro-statically draw unsupported portions of the mirror toward the underlying layer in response to a voltage applied to the electrodes. In one example a voltage of about 100 volts is applied to the electrode to deflect the mirror surface. Accordingly the mirror may be tilted about two axes to direct a radiation beam incident thereon toward a desired target. The magnitude of the mirror tilt angle is controllable by varying the electrode voltage, however, the maximum tilt angle described is 5 degrees.

One problem with MEMs mirrors is that they are extremely fragile. Accordingly, MEMs mirrors may not be uniformly flat, possibly even distorting or bending due to gravity alone. MEMs mirrors may become severely distorted during high frequency switching motions. In each case, the reflected beam will be degraded. Additionally, the fragile nature, material construction and support configuration of the MEMs mirrors cause the mirrors to be a poor heat conductors and therefore unable to dissipate energy absorbed from an incident radiation beam. This limits the energy density of an optical beam that can be deflected by, a MEMs mirror without thermally damaging the mirror. Additionally, conventional multi-layer reflective coatings that could remedy the heating problem by limiting the amount of incident radiation absorbed by a MEMS mirror can not be practically applied to MEMs mirrors, again due to the fragile nature of the mirror construction. This is because the coating are applied at high temperature and low pressure.

Another problem with the MEMs mirror configurations of Aksyuk et al. is that in order to maintain a mirror in an actuated state, e.g. tilted at a desired angle or orientation, the actuation voltage must be continuously applied to the silicon substrate. If a mirror is required to stay actuated for an extended period, e.g. several minutes up to one hour, the mirror element may become overheated. Moreover in a switching systems that may include many hundreds or even thousands of switching elements the entire switching system become overheated from the heat given off during long activation periods. This has heretofore required that heat loads in optical switches be evaluated and cooled. It is also a problem with the device described by Aksyuk et al., that a loss of power will null the electrode voltage and cause the mirror to release to its normally un-actuated position. This is a very undesirable situation in a network switch since upon restoration of power, each switch needs to be reactivated to a desired position.

As a further teaching of Aksyuk et al., an array of MEMs mirrors is taught positioned in a rows and columns. It is a drawback of the row and column layout that the pitch of the mirror centers is at least equal to the mirror dimension, which as stated above is 300 um. Accordingly, the area of the switch layout taught by Aksyuk et al. has a large percentage of unutilized space between mirrors thereby limiting the packing density or number of MEMs mirror per unit area. It is desirable to more densely fill the switch area with movable mirror surface.

Single mirror two axis beam-deflecting devices are also taught by, Yagi et al. in US 6,154,302, Sakata et al. in US 6,201,644, Donelan in US4436260 and Swain et al in US4961627. Each document teaches a light deflection device having a rigid spherical turning body with a flat plane deflection beam surface. In each case the spherical turning body is supported for turning about the spherical center such that the deflection surface is tiltable about two axes. The use of a spherical element provides the designer with a more rigid and mechanically robust tilting surface. Of the cited references, Yagi et al. is considered the closed prior art.

In Yagi et al. the spherical turning body is supported in a support member having a support cavity formed therein and filled with a dielectric liquid for receiving the turning body inside the cavity. A transmissive parallel plate covering the cavity seals the cavity. The spherical turning body includes a plurality if chargeable regions formed thereon with different charging characteristics. Driving electrodes are provided in the support member and apply an electric field to the chargeable regions of the spherical body through the dielectric liquid. A turning torque is applied by charging the driving electrodes to attract one or another of the plurality of differently chargeable regions. The Yagi et al. device is also miniaturized with a spherical diameter of about 100 µm.

On problem with the Yagi et al. device is that a radiation beam to be deflected passes twice through the parallel plate sealing the cavity and twice through the dielectric liquid. These passes through several optical surfaces and different refractive mediums have a high potential for distorting a radiation beam wavefront and changing the focal length of any system deflecting an uncollimated beam. Another drawback of Yagi et al. is that deflecting device is suspended in a liquid and therefore able to freely drift. Such drift is unacceptable where precision beam positioning is desired. Even though, Yagi et al. state that the hemisphere body did not move owing to friction, the dielectric liquid, the hemisphere body and the cavity even without an electrode voltage applied to hold the body in place, it is desirable in the art to have a more reliable and even controllable holding force without applying a holding charge. As a further drawback with the Yagi et al. device, the spherical turning body is only movable to selected discrete orientations e.g. 0 degrees and +/-20 degrees about each axis. It is desirable to have a two-axis beam steering device that can be tilted to any desired angle up to about 45 degrees.

There is also a need in the art for a two-axis beam deflecting device or surface positioning device that is more compact the Montagu device yet not miniaturized like the other devices cited above. Such devices can be usable in many scanning applications and have the benefit of substantially compacting the optical system, being capable of deflecting high-powered beams, being more mechanically rigid and robust and reducing system complexity and cost.

These objects are achieved with an apparatus according to claim 1 and with a corresponding method according to claim 17.

### BRIEF DESCRIPTION OF THE DRAWINGS

Fig. 1A is a cross section view of a preferred embodiment of the invention.
Fig. 1B is a single axis embodiment of the invention.
Fig. 2 is a lower end view of the embodiment of Fig. 1.
Fig. 3 is a partial cross section view of the embodiment of Fig. 1, the coils being omitted for clarity.
Fig. 4 is a lower end view of the structure of Fig. 3 with the coils omitted.
Figs. 5A, B, C, and D are partial cross section views of embodiments with different magnet ring configurations.
Fig. 6 is a diagrammatic plane view of the lower end of the stator and coil windings of the embodiment of Fig. 1 shown flat for clarity.
Fig. 7 is a schematic of the flux circuit of the embodiment of Fig. 1.
Fig. 8 is the cross section of Fig. 1, illustrating the magnetic forces of the embodiment with force diagrams.
Fig. 9 is a lower end view of an array of the devices of Fig. 1, illustrating the packing arrangement for best area density yield.
Fig. 10 is a cross section view of a single magnet embodiment with a core magnet of vertical orientation and a dual axis stator and coil assembly.
Fig. 11 is a horizontal section view of the device of Fig. 10, showing the dual axis coil assembly in plan form.
Fig. 12 is a cross section of the device in Fig. 1, configured with a capacitive position sensor.
Fig. 13 is a side elevation of yet another embodiment of the invention incorporating a right angle light source, beam reflector, and optical position sensor mechanism.
Fig. 14 is a single channel representation of a fiber-to-fiber optical link control system, illustrating fiber tap optical position sensors as components of the system.
Fig. 15 is an electronic servo controller for driving a control current to the stator coils.
Fig. 16 is a radiation scanning system for scanning two and three-dimensional objects.

### DESCRIPTION OF THE PREFERRED EMBODIMENT

What follows is a description of a preferred embodiment of the invention which is described in the claims and several examples of alternative embodiments also described in the claims.

### Ball and Socket

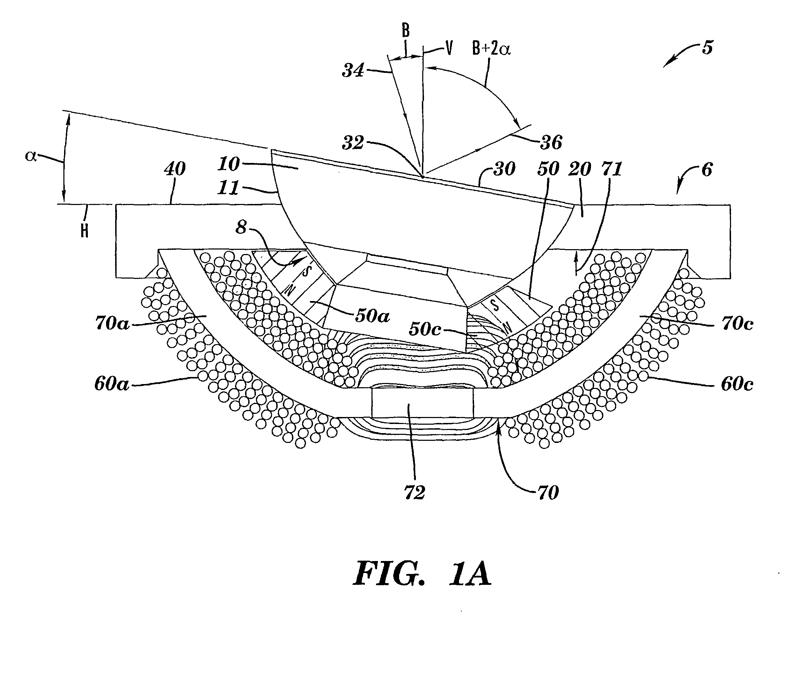

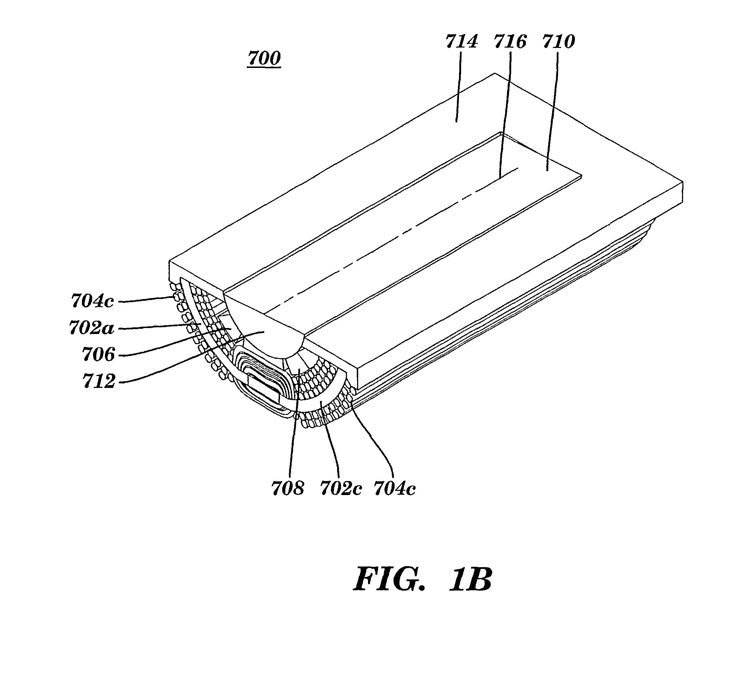

Referring now to Figs. 1-5, there is illustrated the general layout of a preferred embodiment of the invention. Fig. 1A depicts a sectional view showing a device for orienting a surface 30 in a desired orientation e.g. with respect to the surface 6 which is fixed. In the preferred embodiment, the device 5 comprises a two-axis optical beam steering apparatus in the general form of a ball and socket assembly. It is comprised of a movable member 10 in the form of a spherical or ball portion having an outer bearing surface 11 supported in a fixed member 40 that includes a spherical raceway or socket 20 for forming a seat in which the movable member 10 is movably supported for rotation with respect thereto. The fixed member 40 in the present example comprises a thin flat plate but may have other configurations, including other raceway configurations, e.g. conical. As shown in Fig. 1A, the movable member 10 and the fixed member 40 each includes a first side 6 and an opposing second side 8. The fixed member 40 is configured to provide free access to the movable member 10 on each of the first side 6 and the second side 8.

According to the preferred embodiment, the beam steerer 5 includes a mirror surface 30 for reflecting an optical beam therefrom and redirecting the beam to a desired target location by controlled movement of the surface 30. In other embodiments of the invention, the movable member may be used to control the movement of other surfaces, objects or elements, as will be detailed below. The mirror surface 30 may be either directly deposited onto, or attached onto, the movable member 10. In the preferred embodiment, the surface 30 comprises an equatorial plane of the spherical or ball member 10. Alternately, the mirror surface 30 may be formed on other planes of the spherical section, which may or may not be parallel with the equatorial plane.

The sectional view of Fig. 1A is taken through a second equatorial plane of the spherical or ball member 10 that is perpendicular to the surface 30. A radial center 32 of the spherical or ball member 10 is shown on the surface 30 and represents an axis of rotation for the spherical or ball member 10. An optical beam or ray 34 incident on the mirror surface 30 at an angle β with respect to, e.g. a vertical axis V, is reflected at a reflection angle of β + 2α with respect to the vertical axis V, where α is the tilt angle of the surface 30 with respect to, e.g. a horizontal plane H. Accordingly, a reflected beam or ray 36 is deflected through an angle that is double the angle α moved by the surface 30. In the two-axis device, the mirror surface 30 has a second tilt angle in a plane perpendicular to the equatorial section shown in Fig. 1. The second tilt angle is not shown. Accordingly, an input ray 34 may be reflected at a reflection angle that may be any angle contained with a solid cone of angle centered on the rotation axis 32.

### Magnetic Ring

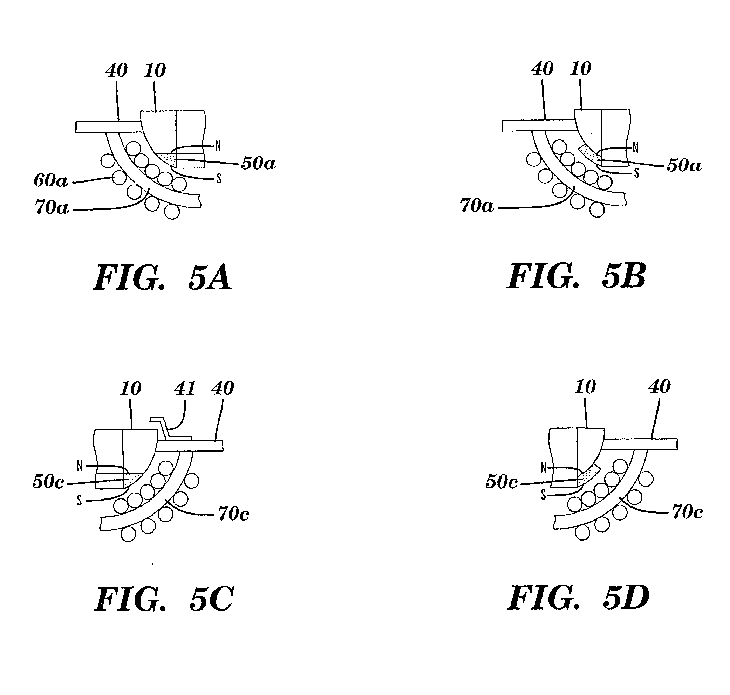

Integral to or attached to the movable member 10 on the second side 8 thereof is a magnetic element 50 comprising a magnetic ring. The magnetic ring 50 is formed and attached to the ball 10 in a manner providing clearance between the ring 50 and the fixed member 40 for allowing the ball 10 to be rotated about the axis 32 through the angle α and a perpendicular tilt angle, not shown. Magnet ring 50 is made up of four magnet portions 50 a-d, an opposing pair of which, 50a and 50c are shown in the section view of Fig. 1A. Each magnetic section comprises opposing north and south magnetic poles, labeled N and S respectively in Fig. 1A and in Figures 5a-5d, such that a magnetic flux passes through each magnet section from one pole to the opposing pole. According to an embodiment of the invention, opposing magnet portions, e.g. 50a and 50c have a south magnetic pole facing the ball 10 and a north magnetic pole facing away from the ball 10. Alternately, adjacent magnet sections have oppositely oriented poles such that in the present example, magnet portions 50b and 50d have a north magnetic pole facing the ball 10 and a south magnetic pole facing away from the ball 10. The ring 50 may be assembled from substantially same sized magnet portions each forming a quarter portion of the ring 50 or the ring 50 may be formed as a single monolithic magnet. As will be detailed further below, the magnetic ring 50 may be formed integral with the ball 10.

### Stator

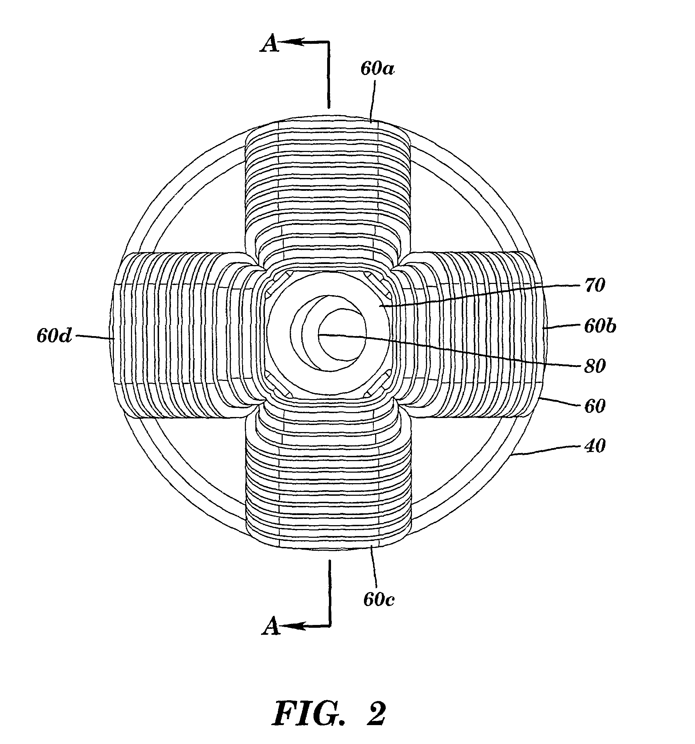

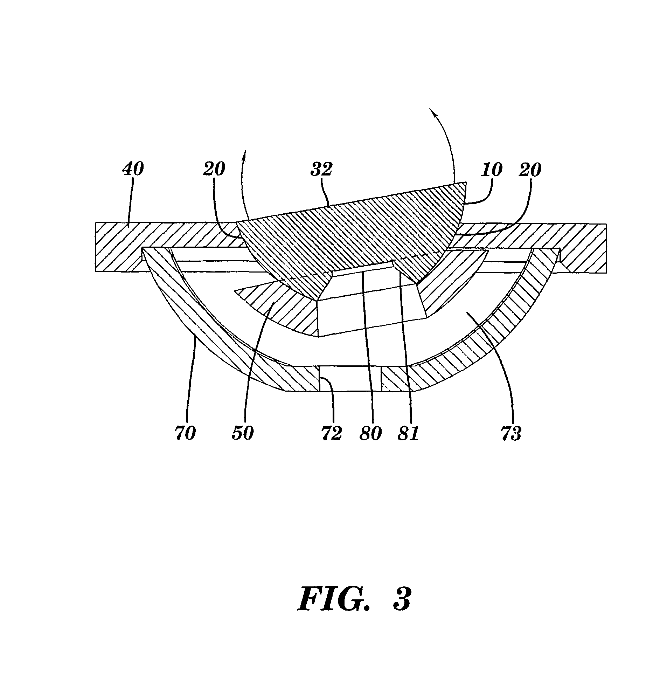

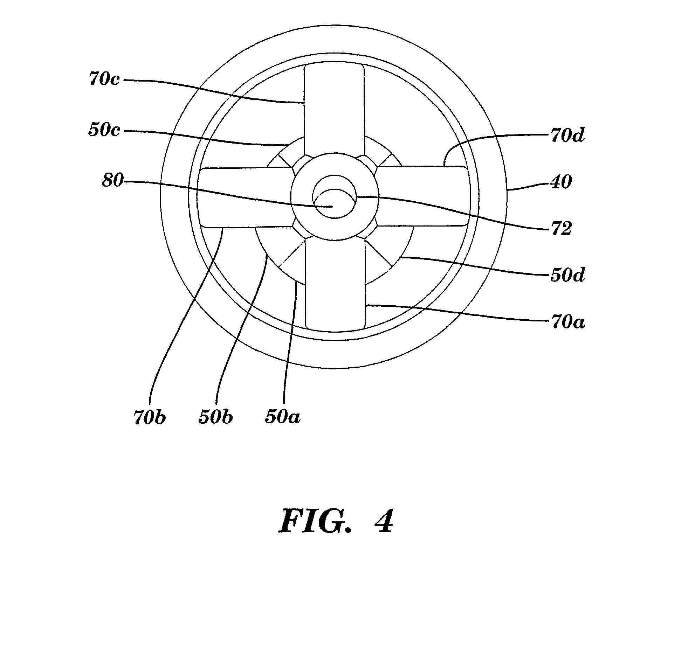

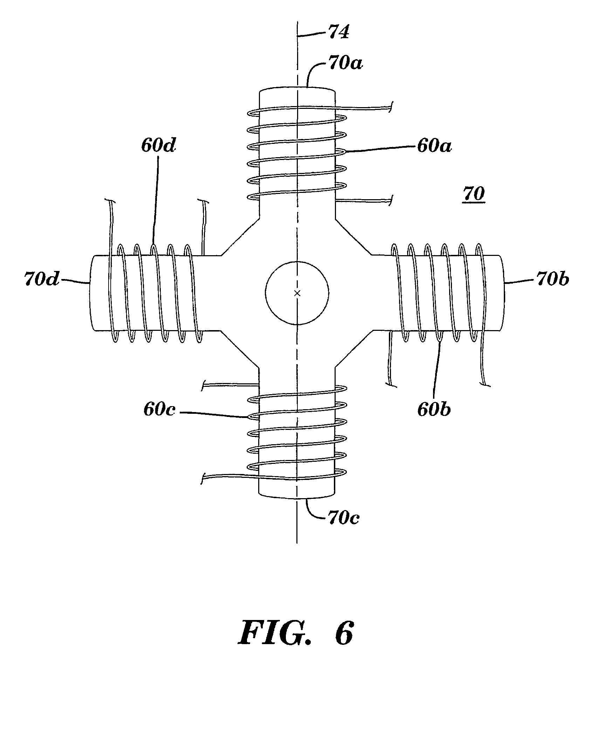

The second side 8 of the steering apparatus 5 is shown in Figure 2. Figures 3 and 4 show the device with the coils removed for clarity. A fixedly supported unitary stator element 70 is provided proximate to the magnetic element 50 such that an air gap is provided between the magnetic element 50 and the stator element 70. The stator element 70 comprises a magnetically permeable material, such as iron, and forms one element of a magnetic circuit. The stator element 70 of Fig. 4 comprises a cruciform element having four stator arms 70a-d corresponding to each of the four magnet ring portions 50a-50d. As can best be seen in Fig. 3, a uniform thickness air gap 73 is formed between each stator arm 70a-d and each magnet ring portions 50a-d by forming the stator arms substantially about a spherical radius centered with respect to the rotation axis 32, of the ball 10. As also shown in Fig. 3, the stator 70 is fixedly attached to the fixed member 40. The stator element 70 is shown in a flat condition in Fig. 6 for clarity.

In accordance with the invention, a magnetic attraction force, or traction force, is generated between the magnetically permeable stator element 70 and the magnetic element 50. The traction force, which acts across the air gap 73, tends to draw the movable member 10 toward the fixed member 40, such that in the preferred embodiment, the spherical ball 10 is drawn into a seated arrangement with the spherical bearing race 20. With sufficient magnetic traction force, and with sufficient friction in the bearing seat interface, the ball 10 can be firmly held in a fixed orientation by the magnetic traction force for an indefinite period.

### Stator Coils

The stator 70 further comprises stator current coils 60a-d, wound onto respective stator arms 70a-d, shown from side 8 in Fig. 2 and shown flat in Fig. 6. As shown in the cross-sectional Figure 1A, opposing stator arms 70a and 70c and associated stator coils 60a and 60c are formed to substantially conform to the spherical shape of the ball 10 at a substantially uniform radius from the radial center 32 with distal ends of each stator arm 70a and 70c fitted into a recess 71 on an underside of the plate 40. Each stator arm 70a-d is fixedly attached to the fixed element or plate 40 by bonding, soldering or by any appropriate attachment method. Each stator coil 60a-d is wound to substantially perpendicularly intersect magnetic flux lines in the air gap 73, as will be further described below. As is shown in Fig. 6 the coils are wound perpendicularly to a longitudinal axis 74 of the stator arms 70a-d.

When an electrical current is applied to any one of stator coils e.g. coil 60a, a magnetic field is induced in around the stator 70. The field generates a force along an axis perpendicular to the coil windings. Accordingly, a current coil 60a induces a magnetic force having a force direction along a longitudinal axis 74 of stator arm 70a. Such a force when acting on the magnet portion 50a can be used to rotate the movable member 10. A current in a first direction might cause a clockwise force thereby proving a clockwise rotation of the ball 10, e.g. through angle α, and a current in the opposite direction creates a counter-clockwise magnetic force for rotating the ball 10 counter-clockwise. If substantially similar currents having the same amplitude and direction are applied to two opposing coils, e.g. 60a and 60c, a magnetic force is induced in each of the stator arms 70a and 70c thereby doubling the magnetic force for rotating the ball 10.

All four coils 60a, b, c and d can be excited with independent currents in both direction and magnitude by one or more current drive circuits. However, in a preferred embodiment, opposing current coils may be connected to the same driver either in series or in parallel such that opposing coils are simultaneously driven by the same current source. The magnetic force generated along a longitudinal axis of each stator arm 70a - 70d can be used to rotate the ball 10 within the seat 20 in a controlled manner. By virtue of having four magnet sections, four stator arms and four coils, the ball 10 may be rotated in two mutually perpendicular axes, thereby tilting the mirror surface 30 in two mutually perpendicular axes as well.

By controlling the currents in each of the four coils, three fundamental conditions can then result. In a first condition, current drivers may provide a clamping force across the air gap 73. The clamping force is applied by driving all four coils to provide a force directed substantially toward a center aperture 72 of the stator element 70 such that the magnetic element 50 is attracted toward the aperture 72 and the attached movable member 10 is drawn by a greater force, than is provided by the magnetic element 50 alone, into the bearing seat 20. A clamping force is also provided when little or no current is applied to the coils 60 because as stated above, a traction force between the magnetic element 50 and the stator 70 is provided even without current in the coils 60.

In a second condition, a levitation current is applied to the coils 60 that generates an induced magnetic levitation force in the stator 70 that substantially directly opposes the clamping force between the magnetic element 50 and the stator 70. The levitation force may have sufficient magnitude to actually lift the movable member 10 for providing a clearance between the ball 10 and the bearing seat 20, or the levitation force may just reduce the clamping force between the magnetic element 50 and the stator 70.

In a third condition, a torque current is applied to the coils 60 for generating induced torque forces in the stator 70. The torque forces are substantially directed along the longitudinal axes 74 of the stator arms 70a-d and magnetic forces are imparted to the magnetic element 50 for rotating the movable member 10. As described above, two mutually perpendicular rotations may be achieved by driving mutually perpendicular coils with an appropriate current. Of course any even number of opposing magnet sections, stator arms and stator coils may be provided to rotate the movable element about a separate axis corresponding to each opposing pair of magnets, stator arms and coils.

### Flux Paths

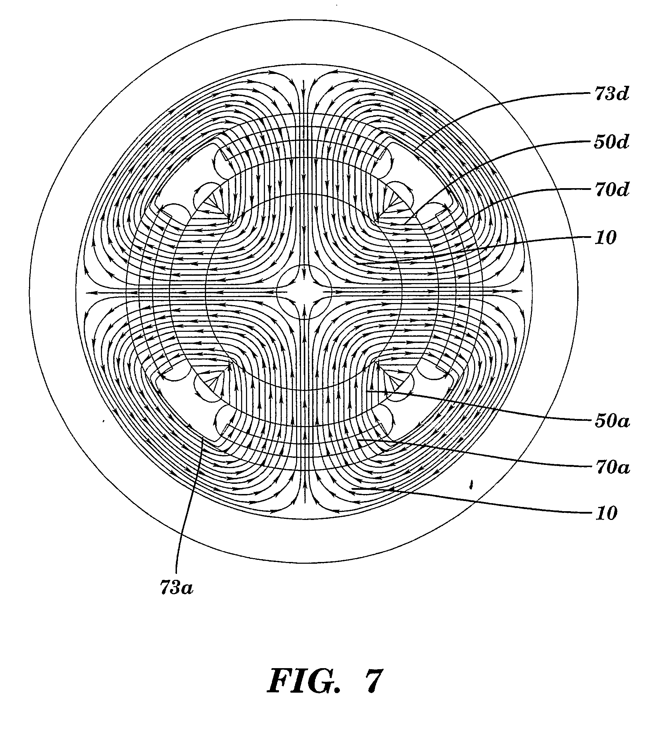

Referring to Fig. 7, four magnetic circuits formed in the two-axis tilt device are shown schematically. A first flux path passes between the north and south poles of magnet portion, 50a, through the ball 10, between the south and north poles of the adjacent magnet portion 50d across a first air gap 73d and into stator arm 70d. The magnetic flux lines then pass through the magnetically permeable stator element 70 from the arm 70d to the adjacent stator arm 70a, across a second air gap 73a and return to the magnet portion 50a. Each magnetic circuit is configured to create concentrated lines of magnetic flux radially across each air gaps 73a - 73d such that the magnet portions 50a - 50d are attracted to the stator element 70 which is fixedly attached to the fixed member 40. A tractive force between the magnet portions and the stator across the air gap draws the ball 10 into the spherical raceway 20. Since the movable member 10 is included in the magnetic circuit, the material of the movable member 10 will beneficially be readily magnetically permeable. However, the magnetic circuit will still be maintained even when the ball material is an optical material such as glass or sapphire, or most other materials e.g. plastic. Alternatively, the movable member 10 may include a magnetically permeable path, passing there through, which may be a separate element associated the movable member 10 such as an iron core element.

Those skilled in the art will recognize that variations of the magnet configuration offer varied manufacturing solutions, some examples of which are shown in Figs. 5a-d. For example the magnet portions 50a-d can be integral with the ball geometry as shown in Figs. 5a and 5c. In these configurations, the ball 10 may be removable from the fixed member 40 from the first side 6 without removing the magnetic element 50. This configuration is convenient if it is desirable to periodically replace the movable member 10 in the event of a damaged mirror or the like. A removable or permanent retaining collars 41, as shown in partial cross section in Fig. 5c. It may be added over ball 10, attached to the first side 6 of plate 40 to insure that ball 10 does not unintentionally escape from its seat. In other examples, the magnetic element 50 may be formed to extend outside the spherical form of the ball 10 as shown in Figs. 5b and 5d. In this configuration, the ball 10 cannot be removed from the fixed member 40 without removing the magnetic element 50. Accordingly, the magnet element 50 may further provide a retaining function for holding the ball in place in the event that a jarring shock force might cause the ball to dislodge from the bearing seat 20. In addition, the protruding edges of magnet ring 50 can also serve as a limit stop against the underside of plate 40 for limiting the tilt angles of the surface 30.

Figs. 5a and 5c further illustrate magnets configured with vertical magnetic pole orientations, while Figs. 5b and 5d illustrate magnet configurations with radial magnetic pole orientations. Any of the configurations may be used, however, the configuration shown in Fig. 5d is the preferred embodiment because it offers the most efficient use of its magnetic volume while providing radial magnetic lines across the air gap 73. Also, as best shown in Fig. 3, a magnetically permeable back iron element 81 may be formed integral with an otherwise non-magnetically permeable ball member 10 to improve the magnetic flux path as shown in Fig. 7. Of course numerous other magnetic circuit elements and flux paths are usable without deviation from the scope of the present invention.

### Force Examples

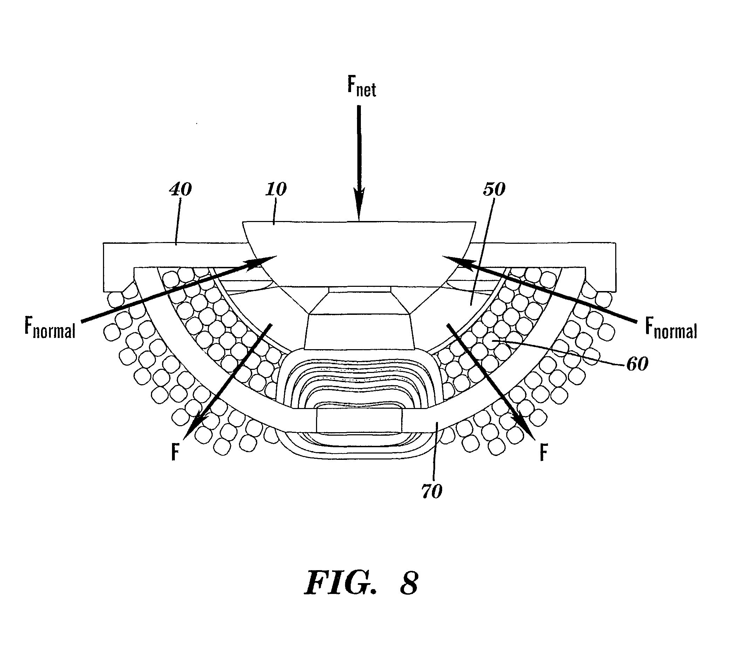

Referring to Fig. 8, and the above description, the clamping force provided between the magnetic element 50 and the stator element 70 provide a net magnetic traction force Fₙₑₜ for retaining the ball 10 in its raceway 20. The magnitude of the clamping force Fₙₑₜ is dependant upon the magnitude of magnetic flux driven through the air gap 73. The flux magnitude depends on the strength of the magnet portions 50a - 50d, the geometry of the air gaps 73a - 73d, the magnetic permeability of the stator arms 70a - 70d and the magnetic permeability of ball 10 or back iron 81at the resulting flux level. The thickness of coils 60 can be seen to limit the minimum available air gaps 73a-73d. Adjusting any of these parameters can produce a wide range of the claiming force magnitude. In Fig. 8, the direction of a traction force F across each air gap 73a-73d is substantially radial with respect to the ball 10. The resultant clamping force (Fnet) is also a function of the average cone angle subtended by the annular magnetic ring 50, i.e. the size of the magnets.

A normal force Fₙₒᵣₘₐₗ directed substantially radially toward the spherical center 32 is generated between the ball 10 at the bearing seat 20 to oppose the clamping force Fₙₑₜ. This normal force generates a frictional torque between the ball 10 and the bearing seat 20 that resists rotational motion of ball 10 about its spherical rotation axis 32. According to the invention, the magnitude of the clamping force Fₙₑₜ is selected to hold the ball 10 in a fixed position for long periods, e.g. from about 50 ms up to many hours, when no current is applied to the coils 60a-d. Moreover, the magnitude of the clamping force may be selected to retain the ball 10 against gravitational forces should it be advantageous to use the steering apparatus in any orientation. The clamping force magnitude may also be selected to retain the ball in place even in the presence of high shock loads if needed.

In the bearing seat 20 and ball 10 interface, the normal force Fₙₒᵣₘₐₗ opposing the clamping force Fₙₑₜ generates a frictional force at the interface that is substantially perpendicular in direction to the normal force thereby applying a frictional torque tending to oppose any rotation of the ball 10 in the seat 20. Accordingly, any force applied by the coils 60 for rotating the ball 10 must be of sufficient magnitude for overcoming the frictional torque. The magnitude of the frictional torque is given by the product of the normal force Fₙₒᵣₘₐₗ and the frictional coefficient in the interface.

For example, in a system design where the ball 10 has a spherical radius of 0.267 inches, (6.8 mm) and wherein the surface 30 is an equatorial plane of the ball 10 offset from the plate 40 by 0.104 inches, (2.6 mm) on the first side 6, when the tilt angle α is zero, and wherein the magnet ring 50 has an outside spherical radius of 0.323 inches, (8.2 mm), the friction torque in inch-pounds is shown in Table 1 below according to a varying air gap dimension in inches. The air gap dimension may be varied by varying the inside spherical radius of the stator 70, indicated by Stator Irad in the Table. In this case, a frictional coefficient in the interface of 0.08 is assumed with an interface contact angle of approximately 23 degrees.

**TABLE 1**

| Stator IRad | Gap (in) | T-friction (in Ibs) |
|---|---|---|
| 0.357 | -0.034 | 2.70E-03 |
| 0.391 | -0.068 | 1.62E-03 |
| 0.422 | -0.099 | 1.08E-03 |

Conversely the larger air gap spacing allows for more copper in the coil windings 60a - 60d for providing a higher torque constant as will be described below. The torque resisting rotation of the ball 10 with respect to the seat 20 is linearly proportional to the coefficient of friction between the component materials and the normal force F_{Normal}. Because of the spherical symmetry of the device, the torque is uniform with respect to the angular position of the ball 10 within the seat 20.

### Fabrication Examples

The movable member 10 is preferably formed from a hard, finely structured material such as a metal, e.g. 52100 bearing steel or an optical material, e.g. sapphire, quartz or other traditional optical materials. These material choices are beneficial because they provide a range of manufacturing techniques that allow fabricating the moving member to the required geometry with a high accuracy. In addition, metals and optical materials are also suitable as bearing materials because the have good wear resistance and because these materials can be formed having a high degree of surface uniformity by conventional smoothing and fine polished finish operations. One advantage of the steel bearing material is its magnetic permeability thereby eliminating the need to provide a separate magnetic path through the movable member 10. Of course the movable element 10 may also comprise a composite element having a plurality of materials included therein. In one example, the movable member 10 may comprise a polymer base substrate with a steel bearings surface incorporated therein and a separate polished aluminum mirror attached thereto.

The fixed member 40 is preferably formed from a dimensionally stable material having good bearing characteristics and is preferably not readily magnetically permeable. Metals such as a phosphor bronze provide a suitable material for the bearing seat 20 because they are readily fabricated by conventional techniques and because phosphor bronze is a suitable matching material for the bearing steel cited above. The fixed member 40 may provide other functionality such as providing a platform for routing electrical connection to the steering device, a heat dissipation path, or as a structural member for supporting one or more steering devices in an array. The fixed member may also be formed as a composite element. For example, the fixed member 40 may comprise a polymer or epoxy based substrate having a bearing seat of a suitable bearing material incorporated therein and the substrate may include copper circuits embedded therein.

In any configuration, the interaction of materials in the bearing interface should be selected according to well known bearing material matching standards. Using the examples above, a bearing steel ball member 10 is matched with a phosphor bronze raceway 20 and the phosphor bronze raceway 20 is plated with a thin layer of silver or other soft lubrication film. In this case the phosphor bronze is the softer material and substantially all of the material wear will occur in the phosphor bronze instead of the bearing steel. In addition, bearing elements may be lapped together after conventional forming so that the contact area at the interface is polished and intimate. Such a bearing may have a coefficient of friction of about 0.3 unlubricated. Other bearing seat material combinations such as hard chrome coated onto leaded bronze can yield much lower coefficients of friction if desired.

The bearing seat interface need not comprise a large contact region such as the described above wherein the intimated contact of the ball 10 over the entire spherical raceway 20. Given that the friction and therefore the torque force is independent of area and dependent on normal force, the spherical raceway 20 of the above example may be reduced to three contact pads equally spaced around the bearing seat. Furthermore these contact points may comprise either a sliding contact as described above, or they may comprise a rolling contact. The rolling contact can be achieved e.g. by rotatably supporting one or more rods, balls, ball bearing or roller bearings in the plate 40 for forming the bearing seat 20. A rolling contact interface may be used to further reduce friction thereby lowering the holding torque of the ball 10. In embodiments wherein the bearing interface is a sliding interface, the coefficient of friction in the raceway 20 may be adjusted by further providing a lubricant between the ball and the bearing seat. There may be a dry film lubricant between the ball and the bearing seat, or there may be a low vapor pressure liquid or semi-liquid lubricant between the ball and the bearing seat. As a further functionality, a liquid lubricant layer may provide a surface tension between the ball and socket for retaining the ball in its socket during magnetic levitation or during short periods of linear acceleration tending to lift the ball from the socket.

In the preferred embodiment of the present invention the ball member 10 provides a discreet, rugged and structurally stiff movable member that allows the designer to select one or more materials for fabricating the ball that substantially eliminate many problems of the prior art. Use of steel, or glass eliminates susceptibility to degradation by heat, moisture, chemical environments and allows the device to be able to withstand increased shock and acceleration during use. Moreover, many more fabrication processes become available for the present invention, e.g. in optical applications, the present invention provides the ability to fmely polish a mirror surface 30 using conventional optical surface preparation techniques such as flat surface grinding and polishing and especially for gang polishing a large number elements simultaneously. The present invention also enables the use of vapor deposited or vacuum deposited optical coatings, e.g. a multi-layered highly reflective dielectric coating or the like, which may be applied onto a mirror surface 30 that is integral with the ball 10. Such fabrication and coating choices are not available for optical switching devices in the prior art.

The present invention also provides a thermal path for more readily removing heat from the steering device 5 since the movable and fixed elements may be formed from readily thermally conductive materials such as metals for quickly removing heat from the coil windings 60 and from the mirror surface 30. The benefits of these improvements to e.g. an optical switching device include providing an optical switch having lower optical signal losses, the ability to reflect optical beams having higher power densities without causing damage to the mirror surface 30 and reduced wavefront distortion in a reflected beam. All of these benefits are a result of the ability to provide an improved optical surface figure, e.g. a flatter mirror, improved heat dissipation and an improved mirror coating.

### Operation

In operation, the movable member 10 may be clamped in a fixed position for a long period without the need for applying any current to the coils 60 due to the clamping force provided by the magnetic element 50. This may allow the steering actuator 5 to direct an optical beam in a fixed direct or at a fixed target and hold the beam position for long periods with using electrical power and without generating heat in the coils 60. To reposition the surface 30 for redirecting the optical beam to another orientation or target, a current may be applied to one or more of the coils 60 to induce a magnetic force in the stator 70. The magnetic force induced in the stator 70 acts on the magnetic element 50 to oppose Fₙₑₜ , thereby reducing or eliminating the torque force holding the ball in place. At the same time, the current in the coils 60 may be driven to rotate the movable member 10 in the raceway 20. The axis of rotation is coincident with a longitudinal axis 74 any of the stator arms 70a - d. The rotation of the movable element tilts the mirror surface 30 for reflecting an incident beam at a new reflection angle. Once the desired position is acquired, the current is turned off, and the ball 10 is once again held in place by the friction torque force. Alternately, an additional clamping force may be applied by inducing a magnetic force in the stator 70 acting in the same direction as Fₙₑₜ.

### Position Detection

It is useful to determine an accurate orientation of the movable member 10 so that its movement can be more accurately controlled. In acquiring a position of the movable member 10 one or more position sensors are provided. In a two-axis device, one position sensor is provided for each axis. Each position sensor may provide an electrical single proportional to a rotational orientation of the movable member 10 with respect to the fixed member 40 or with respect to a reference orientation, e.g a horizontal axis of the mirror surface 30.

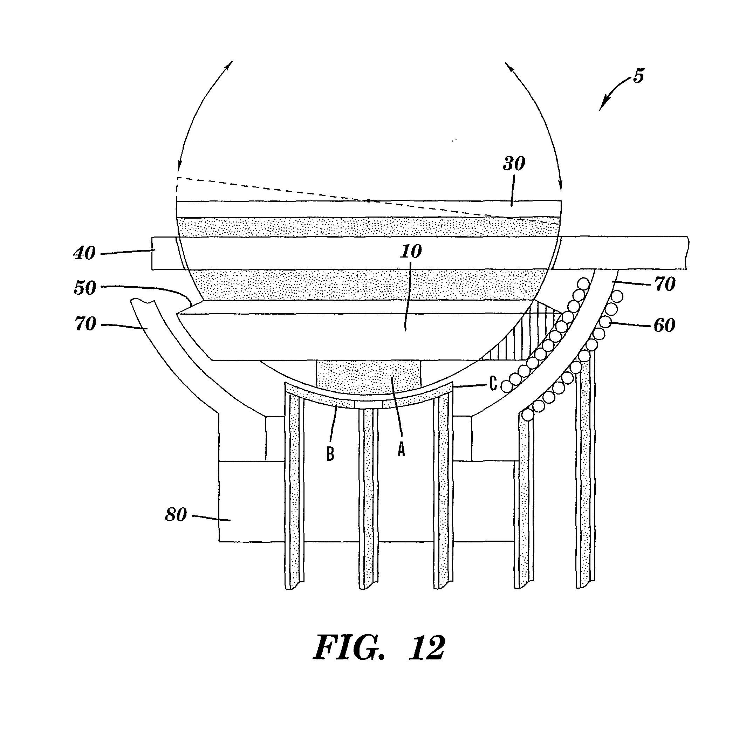

Fig. 12 depicts a steering device 5, according to the present invention, that further includes a capacitive position sensor assembly for sensing a tilt angle of the surface 30 in two axes. The capacitive position sensor comprises a first electrode surface (A) attached to or otherwise formed onto a bottom side of the ball 10 that is electrically isolated from the remaining surface of the ball 10 and that moves with each tilting motion of ball 10 with respect to a second electrode surface (B) that is stationary with respect to the ball 10 and opposes the first electrode (A) through the full range of motion of the surface (A). A substantially uniformly thick air gap (C) separates the electrode surfaces (A) and (B) forming a dielectric layer between the electrodes such that the electrodes (A) and (B) and the air gap (C) form a capacitor. An alternating voltage applied to the electrode (B), is coupled to the electrode (A) through the air gap (C) and a capacitance value of the capacitor formed by (A), (B) and (C) can be measured by sensing an electrical current passing through the electrode (B). By segmenting the electrode (B), e.g. into a plurality of uniformly sized sections, e.g. four quadrants, that are electrically isolated from each other, a current can be measured at each section to determine a capacitance value generated at each isolated section. As the electrode (A) moves over different isolated sections of the segmented electrode (B), the capacitance measured by the electrical current value in a given segment of the electrode (B) will be greater when an opposing area of the electrodes (A) is large over the particular section of the electrode (B) such that the section with the largest overlap with electrode (A) will provide the largest current passing therethrough. Accordingly, as the motion of the ball 10 tilts the surface 30 and the electrode (A) moves over the electrode section of electrode (B), each segment of the electrode (B) will have a different current than other of the segments of electrode (B) and the position of the ball 10 can be determined from the measured values of the current in each of the segments of electrode (B).

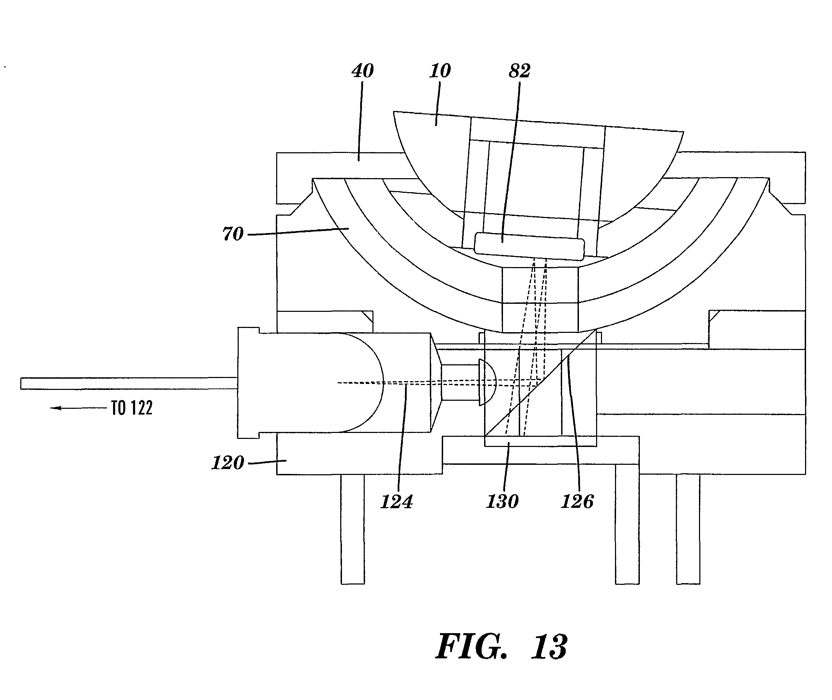

Referring to Fig. 13, there is illustrated another example of an optical position detection system applicable to these embodiments of the invention. In this example a base member 120 is provided with cavities suitable for receiving a light source 122, a beam splitter mirror assembly 126, and Position Sensitive Detector (PSD) 130 with the orientations shown. A light beam 124 from the light source 122 is reflected off beam splitter mirror assembly 126 towards a mirror 82 on the underside of ball 10, and back through beam splitter mirror assembly 126 to a two dimensional active surface of PSD 130. The PSD 130 provides an electrical signal indicative of the position of the reflected beam with respect to a center position of the two dimensional active surface. As in the previous example, any tilting of ball 10 away from the a horizontal or other reference plane causes a shift by twice the tilt angle in the reflected light beam position on the PSD which outputs an electrical signals corresponding to the x and y coordinates of the reflected beam on the PSD.

Other optical position sensor configurations within the scope of the invention are easily derived. For example, it will be apparent to those skilled in the art that although mirror 82 and the associated light source and sensors may be configured with respect to the equivalent movable component of ball 10 so as to have mirror 82 be other than parallel with the topside mirror surface 30. The light source may be offset from the detector pairs, so that the source light beam and reflected light beam angles are significantly offset rather than nearly co-axial. An illumination detector may also be configured to receive reflected radiation from the topside mirror surface 30 for determining an orientation thereof.

### Electronic Control

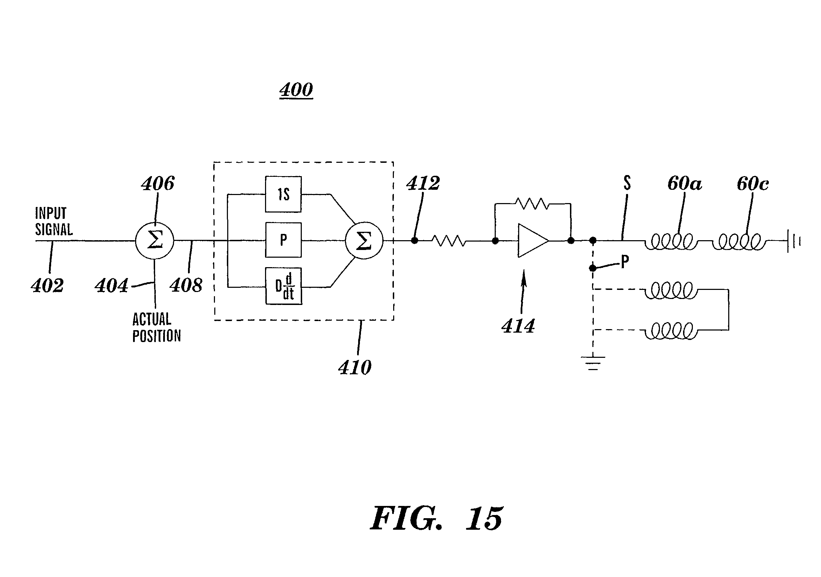

As will be readily apparent to those skilled in the art, the beam steering apparatus 5 may further include a current driving circuit 400, shown schematically in Figure 15, for receiving a command for moving the ball 10 to a desired orientation. The circuit 400 may also receive a signal indicative of an actual position of the ball 10 based on position sensing device signals received back from the device 5. Moreover, the circuit 400 may also provide a difference signal for moving the ball 10 from an actual position to a desired position and amplify the difference signal for driving a current in the coils 60a - 60d. The circuit 400 may also include a servo-controlled amplifier for driving electrical current to the coils in a precise manner for achieving a very precise orientation of the ball 10. Servo current drives are well known and widely used.

In a preferred embodiment of the current driving circuit 400, a Proportional-Integrator-Derivative (PID), servo driver architecture is depicted in Figure 15. Figure 15 represents a single PID device, which may be used to drive a single pair of opposing coils, e.g. 60a and 60c. The opposing coils may be driven in series as show at the driver output S or the opposing coils may be driven in parallel as shown along an output path P, shown in Fig. 15 in phantom. In operation, the circuit 400 receives an input signal 402 from another device such as a digital computer or an analog processor, not shown. The input signal 402 represents a desired orientation of the ball 10 in one axis. The circuit 400 further receives an actual orientation or position signal 404 from one or more position sensors associated with the same one axis. The input signal 402 and the actual orientation signal 404 are summed in a device 406 to provide an orientation or position error signal 408 indicative of how much the ball 10 needs to be moved in the corresponding one axis to achieve the desired orientation or position. The error signal 408 is delivered to a PID servo device 410 for providing a current signal 412 which is amplified by a current amplifier 414 and delivered to opposing coils in one of the configurations S or P. A substantially similar servo drive circuit is used to provide a drive current signal to other sets of opposing stator coils e.g. 60b and 60d.

### An Optical Signal Switching Apparatus

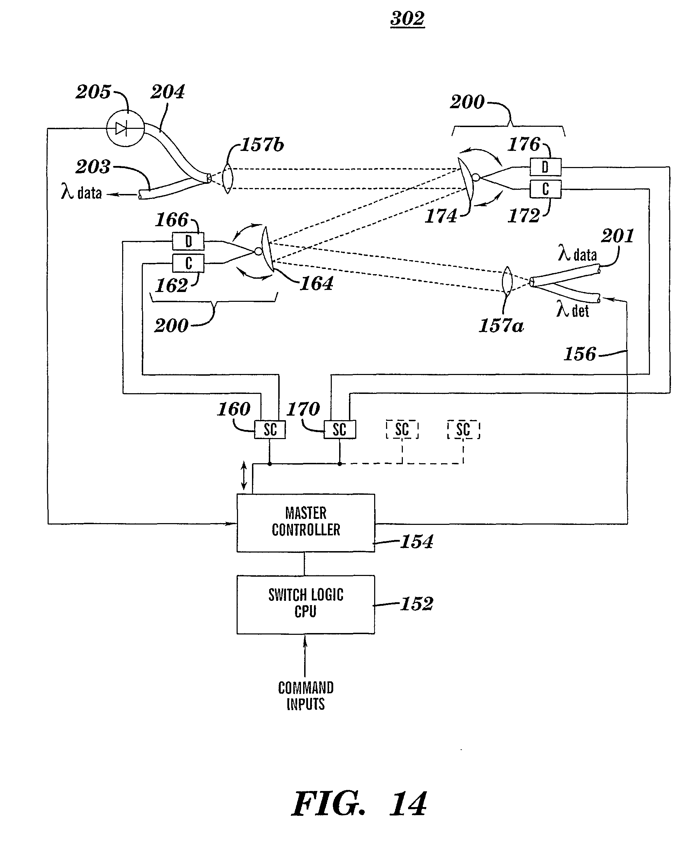

Referring now to Fig 14, there is illustrated a schematic diagram depicting a free space optical link 302. The free space optical link comprises two optical steering devices according to the present invention serving as optical switches 200 embodying the above described two-axis steering device. The switches 200 may direct an optical signal or radiation beam from a first optical fiber 201 to second optical fiber 203. The free space link 302 is merely representative of one channel of what may comprise many hundreds of free space links incorporated into a single communications switching hub. Moreover, the free space link may be linked with other channels such that the schematic of Fig. 14 may represent any pairing of fiber optic channels in the communications hub.

To control the switching, electrical signal inputs are directed to switch logic CPU 152, which is connected to a master controller 154. The switch logic CPU 152 determines which combination of free space switches 200 will be used to complete the desired channel connection. The switch logic CPU 152 then sends a signal to the master controller 154, which is used to drive one or more servo controllers 160 and 170 for driving stator coil currents 162 and 172 of the selected switch devices 200. The servo controller 160 and 170 utilize position feedback from position sensors 166 and 176 to acquire a position of the mirrors 164 and 174 and to orient one or both of the mirrors in a desired manner. An optical signal from the input fiber 201 of a first communication channel, is collimated by a lens element 157a and reflected by each of the switches 200, by the switch mirrors 164 and 174. The collimated optical signal beam is then focused by a second lens 157b, which focuses the beam onto an end of an output fiber 203 for passing the optical signal thereto. Alternately, the system is reversible such that the input signal may be received at the fiber 203 and output to the fiber 201.

In operation, master controller 154 may insert an optical control signal 156 into the input optical fiber channel 201 to be used for optimizing the channel connections. The optical control signal may comprise a light beam having a know wavelength that is different that the wavelength of any communication signal. The control signal 156 follows the same optical path as the communication signal except that a radiation detector 205 is connected to a fiber tap 204, tapped into the output fiber channel 203. The fiber tap 204 samples a few percent of the light in the receiving fiber 203 or may just sample the control signal. In this case, the control signal 156 reaches the detector 205 via the tap filter 204 and provides an electrical feedback signal to the master controller 154. The electrical feedback signal may be used to optimize the channel connection. A first optimization is performed by the coordinated scans of mirrors 164 and 174 such that the impinging beam targets multiple lateral locations on to the output fiber lens 157b with projections that are parallel to each other while it evaluates the signal in detector 205 for the best coupling. When a maximum is found the beam is laterally relocated to that pint on lens 157b. This optimization may be performed in two axes to optimize the connection coupling.

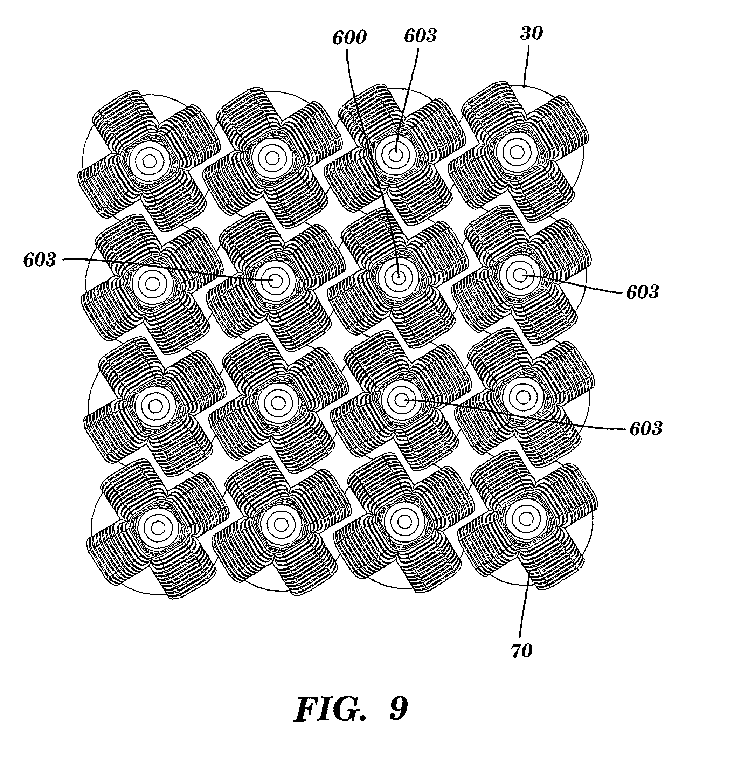

Referring to Figs. 2 and 9, the beam steering apparatus 5 of the present invention is shown from the second side 8 thereof with the mirror surface 30 facing away from the viewer. A footprint of the steering apparatus 5 from the bottom side is cruciform due to the shape of the four-armed stator 70 and the four coils 60a-d. This shape is conducive to a nesting arrangement as shown in Fig. 9. A second side footprint of each steering apparatus is formed for the nesting of a plurality of the steering devices together in an improved packing efficiency over systems of the prior art. Utilizing a circular top mirror 30 and a cruciform stator element 70, a plurality of the devices may be packed together so that edges of a first mirror 600 may be placed proximate to four adjacent mirrors edges 603 as shown in Fig. 9. Accordingly, a unit to unit spacing defined by a distance or pitch between adjacent mirror centers is about 20% greater than may be expected from individual beam steering devices positioned in rwo column arrangements that can not be nested together.

### A Single Magnet Embodiment

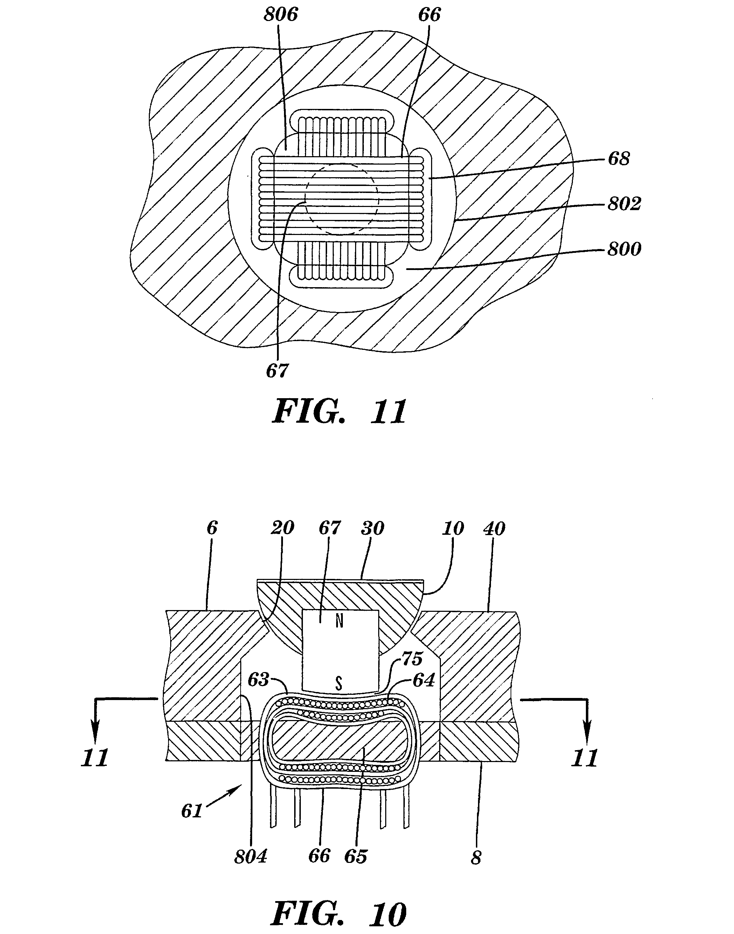

Referring to Figs. 10 and 11, another embodiment of the invention utilizes a unitary two-pole magnet 67. This embodiment of the invention includes a movable member 10, disposed in a raceway 20 of a fixed member 40 for movement with respect thereto, as described above. According to this embodiment a single, axially oriented magnet 67 is disposed in a cavity of the movable member 10 on a second side 8, opposing a first side 6. In this case, the magnet 67 is circular in cross-section but other cross-section shapes can be utilized. The magnet 67 includes a single north and a single south pole, at opposite ends thereof, with one of the poles facing a stator assembly 61. The stator assembly 61 comprises a magnetically permeable stator 65 that is fixedly supported with respect to the fixed member 40. The stator assembly 61 is positioned proximate to the magnet 67 and may be formed with a spherical radius 63 to conform to a substantially matching spherical radius 64 formed on the magnet 67. Accordingly, a substantially uniform air gap 75 is provided between the magnet 67 and the stator 65 through the entire range of motion of the movable member 10. Moreover, a substantially uniform traction force is provided between the magnet 67 and the stator 65, over the entire range of motion, for drawing the movable member 10 into the raceway 20 and holding the movable member in a fixed orientation without the need for electrical power.

The stator assembly 61 further includes a pair of orthogonal interlaced coil assemblies 66 wound onto the magnetically permeable stator 65. As a separate electrical current is applied to each coil assembly 66, a magnetic field is induced in the stator 65 with each coil 66 inducing a perpendicular magnetic force with respect to the other.

A cross section taken through the stator 65 is shown in Figure 11. In this embodiment, the stator 65 comprises a disk 800 having an outer diameter 802 that fits into a bore 804 of the fixed member 40 for securing the stator in place by any suitable assembly technique. Four slots 68 are provided in the disk 800 and pass therethrough for providing a passage for winding the orthogonal coil assemblies 66 around a center region 806 of the stator 65. Each coil assembly 68 is wound orthogonal to the other such that a current applied to each coil induces a perpendicular magnetic force within the stator 65 for moving the magnet 67 and attached movable member 10 through two orthogonal tilt axes. As described above, a servo controller may be used to control the currents in coil assemblies 66 as desired.

### A single axis embodiment

In another embodiment of the present invention, a single tilt axis device 700 is shown in Figure 1B. The single axis device 700 has a substantially identical cross-section as is shown for the device 5 in Figs 1A and 3. However, the single axis device 700 includes a stator 702 having only one pair of opposing stator arms 702a and 702c and stator coils 704a and 704c. The single axis device 700 comprises two magnet elements 706 and 708. In this case a magnetic flux path extends across an air gap between the magnet 708 and the stator arm 702c, along the stator to the stator aim 702a, across a second air gap between stator arm 702a and the magnet 706 and through the cylindrical element 712. In the device 700, an elongated mirror surface 710 is formed onto a partial cylindrical 712. The magnets 706 and 708 are attached to the partial cylinder 712 and may extend along its full length or along only a portion of the length of the cylindrical element 712. Similarly, the stator 702 may extend along its full length or along only a portion of the length of the cylindrical element 712. The cylinder portion 712 is seated in a cylindrical bearing seat formed in a support plate 714. Accordingly the signal axis device may be used to scan an optical signal along a substantially one-dimensional line. One application of the device 700 may be to scan a scan line 716, incident on the mirror surface 710 such that the entire scan line is scanned through a range of angles.

### Radiation scanning systems

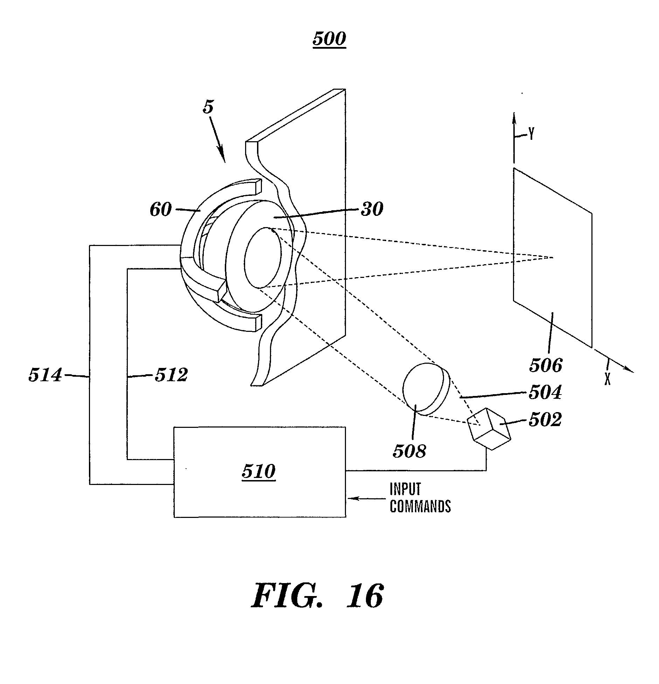

Referring to Fig. 16, another example and application of the invention includes a two axis beam scanning system 500 which may replace the prior art system of Montagu in all types of systems such as laser marking or scribing, material processing, including laser welding and hole drilling applications in metals and printed circuit boards, (PCB), that may require very high power densities at the deflecting mirror surface 30. Other uses for the beam scanning system 500 may be for scanning a radiation beam over a two dimensional plane for image recording onto photosensitive material, medical applications such as laser dermatological or eye surgery applications or for any other application where precise control of the position of a beam may be required. Such applications may include reading image information, e.g. in a document scanner or recording image information, e.g. in a laser printing device. Moreover, the system 500 may be used for scanning a three dimensional object or a scene, e.g. for performing a scan of an object or a medical patient with an X-ray or other diagnostic radiation beam, or for performing a security scan wherein an image of a three dimensional object or scene is being scanned by the system 500 for recorded by a camera or image recording device. Alternately such a device may be used for light beam display systems, for tracking an object or an optical signal such as may be used in free space optical data communications or for targeting designators.

Accordingly a radiation beam scanning system 500 comprises a one or a two-axis beam steering device 5 according to the present invention, as shown in any of the configurations described herein. In one embodiment of the scanning system 500, a radiation beam source 502 provides a radiation beam 504, which is incident on the movable mirror surface 30 of the steering device 5. The radiation beam 504 is reflected by the surface 30 such that the beam 504 is directed onto a two dimensional scan plane 506 and two tilt angles of the mirror surface 30 may be manipulated to position the radiation beam 504 at desired x and y coordinates in the scan plane 506 or to continuously scan the plane 506 in a desired pattern. In the case where a focusing device, e.g. a lens 508, is provided, the radiation beam path, the beam 504 may be substantially focused over the entire scan plane 506.

A electronic controller 510, including a current driving circuit 400 as described above, is provided to control each separate tilt angle of the surface 30 by modulating current amplitudes delivered to each of the coils 60 of the device 5 by the connection 512, as is described above. The electronic controller 510 for defining desired motions of the ball 10 might receive an input command from another device. The electronic controller 510 may also receive a position feedback signal from a two-axis position detector associated with the device 5 by the connection 514, and process the feedback signal for controlling the current amplitude in a desired manner. Accordingly, the system 500 may be controlled in several ways to, e.g. raster scan the radiation beam 504 over the scan plane, to selectively position the beam 504 at discrete positions in the scan plane 506 or to hold the beam 504 in a fixed position in the scan plane 506. As is described above, the system 500 may hold the beam 504 in a fixed position indefinitely without the need for driving the coils 60. The electronic controller 510 may also control the output of the radiation beam 504 from the laser 502. Accordingly, the electronic controller 510 may further include a radiation source driver for modulating output amplitude and a wavelength of the radiation beam.

In other embodiment of the system 500, the lens 508 may be positioned anywhere along the optical path of the radiation beam 504 and may be used to focus the radiation beam over a flat field as in the example above where the scan plane 506 is planar. In other applications, the scan plane 506 may comprise a spherical, cylindrical or other surfaced shape and the lens 508 may be designed to provide a focused radiation beam over a desired scan region.

In another embodiment of the system 500, an image-recording device such as a film or digital camera system, or a radiation beam detector, may replace the radiation source 502 shown in Figure 16. In this case, the mirror surface 30 may be controlled to scan the surface 506 to record an image thereof or to search for a desired camera response, e.g. the brightest spot, a particular radiation wavelength or a particular feature. Again, the scan area 506 may comprise a three dimensional space such as an object or a scene. Moreover, the lens 508 may be included in the camera and may comprise an automatically focusing lens. In yet another embodiment, the scanning system 500 may be used without the lens 508 for scanning a diverging radiation beam 504 from the radiation source 502 over a region or plane 506. One application of such a device is a free space communication signal-sending device. Alternately, the device 502 may comprise a free space communication signal-receiving device by placing a radiation detector on the surface 30.

In another embodiment of the system 500, the lens 508 may be positioned telecetrically with respect to the scanning device 5 between the device 5 and the scan plane 506. The telecetrcially positioned lens 508, (not shown) is positioned such the that the scanning device 5 is coincident with a focal plane of the lens 508. Accordingly, for each pointing direction of the radiation beam by the device 5, the lens 508 will direct the radiation beam to be incident onto the scan plane 506 such that the beam is incident substantially perpendicular to the scan plane 506. Accordingly, the scanning device 5 combined with the lens 508 positioned telecetrically with respect thereto may selectively address a plurality of discrete x and y points on the scan plane 506 with an angle of incidence of the beam that is substantially perpendicular to the scan plane surface 506. This capability is readily applicable in laser processing devices e.g. in laser via drilling devices for drilling via holes in PCB's, in laser trimming device for trimming electronic circuit components, e.g. resistors and capacitors and circuit repair devices, e.g. for repair integrated circuits by laser ablation of selected portions of the circuit.

Variations on these embodiments will be readily discemable to those skilled in the art. The steering device 5 can be scaled up and down to meet quite different applications and requirements. There will be design limits to the mass that can be accommodated on the steered element, but electronic and mechanical microstructures provide for many possible applications of the functionality and performance provided by the invention, in addition to simple beam steering.

Although the surface 30 is typically depicted as a flat mirror surface, in the embodiments described herein, other surfaces of any desired shape or function may be envisioned by one of skill in the art. For example, the surface 30 may comprise a spherical or aspherical reflector. Moreover the surface 30 may perform other optical functions other than reflection such as wavelength selection, e.g. when the surface 30 comprises a diffraction grating, or wavelength filtering, e.g. when the surface 30 is coated with a wavelength selective absorption coating. As is known in the prior art, the spherical element can be used in transmission and those skilled in the art will recognize that the present invention may also be used in transmission.

The invention is susceptible of other variants and embodiments. For example, there is an angularly repositionable platform, which may be used to orient an element attached thereto in a precisely controlled manner, where the element may be manipulated in two axes over a limited angular range within the bearing seat of up to about 40 degrees. In another variation, the current driver may be in communication with a manually control input device such as joy-stick or a mouse attached to a computer for manually adjusting an orientation of the movable member 10.

As another example, there is a planar array of angularly repositionable platform systems consisting of a planar structure incorporating a uniformly distributed pattern of individual angularly repositionable platform systems as described above. The control circuit may be common to the array and selectively connectible to any of the angularly repositionable platform systems within the array. Similarly to the arrays described above, there may be individual control circuits for each steering device, or there may be a common control circuit in each beam steering array, where the control circuit is selectively connectible to any of the steering devices within its respective beam steering array.

## Claims

1. An apparatus for orienting a surface (30) comprising:
- a movable member (10) having a first side (6) and an opposing second side (8), said first side including the surface (30) to be oriented and said second side comprising an outer bearing surface (11);
- a fixed member (40) having an inner bearing seat (20) for receiving the outer bearing surface (11) therein such that a coefficient of friction exists between the outer bearing surface and the inner bearing seat;
**characterized in that** the apparatus further comprises:
- a magnetic element (50) attached to and movable with the movable member (10), the magnetic element having a magnetic field;
- a magnetically permeable stator element (70) fixedly attached to the fixed member (40) and positioned in the magnetic field such that a substantially uniform air gap (73) separates the magnetic element (50) and the stator element (70) over a range of movement of the movable element (10), the stator element and the magnetic element providing a traction force therebetween, the traction force in combination with the coefficient of friction providing a clamping force sufficient for holding the surface (30) in a fixed orientation.

2. The apparatus of claim 1, further comprising:
- a current carrying member (60) positioned in the magnetic field for inducing a stator magnetic field in the stator element (70) for interacting with the magnetic field of the magnetic element (50).

3. The apparatus according to claim 2 further comprising:
- a current driver (400) for providing a controllable current in the current carrying member (60) for inducing the stator magnetic field.

4. The apparatus of any of the above claims wherein the traction force in combination with the coefficient of friction provides a clamping force sufficient for holding the movable member (10) in a stationary orientation with respect to the fixed member (40) without any other forces being applied.

5. An apparatus according to any of the above claims further comprising an orientation sensor for providing a sensor signal representative of an actual orientation of the surface (30).

6. An apparatus according to any of the above claims wherein the surface (30) comprises an optical element for interacting with a radiation beam incident thereon.

7. An apparatus according to any of the above claims wherein the surface (30) comprises a reflective surface for reflecting a radiation beam incident thereon.

8. An apparatus according to any of the above claims wherein the outer bearing surface (11) comprises a substantially spherical outer bearing surface and wherein the inner bearing seat (20) comprises a substantially spherical bearing raceway and wherein the outer bearing surface (11) and the inner bearing seat (20) have a substantially coincident spherical radius.

9. An apparatus according to any of the above claims wherein the a stator element (70) comprises a cruciform shaped stator element, spherically formed to provide a substantially uniform air gap (73) surrounding the accessible second side (8) of the movable member (10), the stator element further comprising four stator arms (70a-d) connected together by a center portion for providing a magnetic flux path between adjacent stator arms (70a-d), the four stator arms comprising first and third opposing stator arms (70a and 70c) having a substantially coincident first longitudinal axis (74) and second and fourth opposing stator arms (70b and 70d) having a substantially coincident second longitudinal axis said first and said second longitudinal axes being substantially perpendicular.

10. An apparatus according to claim 9 wherein the magnetic element (50) comprises four magnet ring portions (50a-d) each having a north magnetic pole and a south magnetic pole, the four magnetic portions including opposing first (50a) and third (50c) portions corresponding with the first (70a) and third (70c) stator arms and opposing second (50b) and fourth (50d) portions corresponding with the second (70b) and fourth (70d) stator arms and each of the magnetic portions is oriented with the north and south magnetic poles oppositely facing on adjacent sections.

11. An apparatus according to claim 10 further comprising four current coils (60a-d) wound around each of the four stator arms (70a-d) to provide opposing first (60a) and third (60c) current coils and opposing second (60b) and fourth (60d) current coils.

12. The apparatus of claim 11 wherein opposing first (60a) and third (60c) current coils are connected in one of a parallel and a serial current circuit and driven by a first current driver (400) and wherein second (60b) and fourth (60d) opposing current coils are connected in one of a parallel and a serial current circuit and driven by a second current driver (400).

13. The apparatus of claim 1 wherein the outer bearing surface (11) comprises a substantially cylindrical surface and wherein the inner bearing seat (20) comprises a substantially cylindrical bearing raceway and wherein the cylindrical bearing surface and the cylindrical bearing raceway have a substantially coincident cylindrical radius.

14. The apparatus according to any of claims 6 - 10 further comprising a radiation beam source (502) for generating a radiation beam (504) directed to be incident on the surface (30) and wherein the radiation beam (504) is redirected by movement of the surface (30).

15. The apparatus according to claim 14 further comprising a lens element (508) positioned in the path of the radiation beam (504) for focusing the radiation beam at a desired focal position.

16. The apparatus according to claim 14 further comprising an electronic controller (510) for controlling an orientation of the surface (30) for directing the radiation beam (504) to desired positions on the surface (506) and for modulating one of an amplitude and a wavelength of the radiation source (504).

17. A method for orienting a surface (30) comprising:
- providing a movable member (10) having a first side (6) and an opposing second side (8), said first side including the surface (30) to be oriented and said second side comprising an outer bearing surface (11);
- providing a fixed member (40) having an inner bearing seat (20) for receiving the outer bearing surface (11) therein such that a coefficient of friction exists between the outer bearing surface and the inner bearing seat;
- attaching a magnetic element (50) having a magnetic field associated therewith to the movable member (10) for movement therewith; and,
- positioning a magnetically permeable stator element (70) in a fixed position and within the magnetic field such that a substantially uniform air gap (73) separates the magnetic element (50) and the stator (70) over a range of movement of the movable element (10), such that the stator element (70) and the magnetic element (50) provide a traction force therebetween, the traction force in combination with the coefficient of friction providing a clamping force sufficient for holding the movable member (10) in a fixed orientation.

18. The method of claim 17, further comprising:
- positioning a current carrying member (60) in the magnetic field for inducing a stator magnetic field in the stator element (70) for interacting with the magnetic field of the magnetic element (50).

19. The method of claim 18 further comprising:
- passing a current through the current carrying member (60) for controlling the stator magnetic field to oppose the traction force.

20. The method of claim 18 further comprising:
- passing a current through the current carrying member (60) for controlling the stator magnetic field to rotate the movable member (10) with respect to the fixed member (40).

21. The method of any of claims 17 - 20 further comprising:
- selecting the traction force magnitude in combination with selecting the coefficient of friction such that a clamping force sufficient for holding the movable member (10) in a stationary orientation with respect to the fixed member (40) results without any other forces being applied.

22. The method of to any of claims 17 - 21 further comprising:
- sensing a position of the movable member (10), and
- providing a sensor signal representative of an actual orientation of the surface (30).

23. The method of any of claims 17 - 22 further comprising:
- attaching an element onto the surface (30); and,
- orienting the surface 30 for positioning the element in a controlled manner.

## Patentansprüche

1. Vorrichtung zum Orientieren einer Oberfläche (30), die umfasst:
- ein bewegliches Element (10), das eine erste Seite (6) und eine gegenüberliegende zweite Seite (8) besitzt, wobei die erste Seite die zu orientierende Oberfläche (30) enthält und die zweite Seite eine äußere Lageroberfläche (11) aufweist;
- ein festes Element (40), das einen inneren Lagersitz (20) für die Aufnahme der äußeren Lageroberfläche (11) besitzt, derart, dass zwischen der äußeren Lageroberfläche und dem inneren Lagersitz ein Reibkoeffizient vorhanden ist;
**dadurch gekennzeichnet, dass** die Vorrichtung ferner umfasst:
- ein magnetisches Element (50), das an dem beweglichen Element (10) befestigt und zusammen mit diesem beweglich ist, wobei das magnetische Element ein Magnetfeld erzeugt;
- ein magnetisch permeables Statorelement (70), das an dem festen Element (40) fest angebracht ist und in dem Magnetfeld in der Weise positioniert ist, dass ein im Wesentlichen gleichmäßiger Luftspalt (73) das magnetische Element (50) und das Statorelement (70) über einen Bewegungsbereich des beweglichen Elements (10) trennt, wobei das Statorelement und das magnetische Element zwischen sich eine Zugkraft schaffen, die in Kombination mit dem Reibkoeffizienten eine Klemmkraft schafft, die ausreicht, um die Oberfläche (30) in einer festen Orientierung zu halten.

2. Vorrichtung nach Anspruch 1, die ferner umfasst:
- ein Stromtransportelement (60), das in dem Magnetfeld positioniert ist, um in dem Statorelement (70) ein Statormagnetfeld zu induzieren, um mit dem Magnetfeld des magnetischen Elements (50) in Wechselwirkung zu treten.

3. Vorrichtung nach Anspruch 2, die ferner umfasst:
- einen Stromtreiber (400), der einen steuerbaren Strom in dem Stromtransportelement (60) schafft, um das Statormagnetfeld zu induzieren.

4. Vorrichtung nach einem der obigen Ansprüche, bei der die Zugkraft in Kombination mit dem Reibkoeffizienten eine Klemmkraft schafft, die ausreicht um das bewegliche Element (10) in einer stationären Orientierung in Bezug auf das feste Element (40) zu halten, ohne dass irgendwelche anderen Kräfte ausgeübt werden.

5. Vorrichtung nach einem der obigen Ansprüche, die ferner einen Orientierungssensor umfasst, um ein Sensorsignal zu schaffen, das eine momentane Orientierung der Oberfläche (30) repräsentiert.

6. Vorrichtung nach einem der obigen Ansprüche, bei der die Oberfläche (30) ein optisches Element umfasst, das mit einem auf sie auftreffenden Strahlungsbündel in Wechselwirkung steht.

7. Vorrichtung nach einem der obigen Ansprüche, bei der die Oberfläche (30) eine reflektierende Oberfläche aufweist, die ein darauf auftreffendes Strahlungsbündel reflektiert.

8. Vorrichtung nach einem der obigen Ansprüche, bei der die äußere Lageroberfläche (11) eine im Wesentlichen sphärische äußere Lageroberfläche aufweist und bei der der innere Lagersitz (20) eine im Wesentlichen sphärische Lagerlaufbahn aufweist und bei der die äußere Lageroberfläche (11) und der innere Lagersitz (20) einen im Wesentlichen übereinstimmenden Kugelradius besitzen.

9. Vorrichtung nach einem der obigen Ansprüche, bei der das Statorelement (70) ein kreuzförmiges Statorelement umfasst, das sphärisch ausgebildet ist, um einen im Wesentlichen gleichmäßigen Luftspalt (73) zu schaffen, der die zugängliche zweite Seite (8) des beweglichen Elements (10) umgibt, wobei das Statorelement ferner vier Statorarme (70a-d) aufweist, die durch einen Mittelabschnitt miteinander verbunden sind, um einen Magnetflusspfad zwischen benachbarten Statorarmen (70a-d) zu schaffen, wobei die vier Statorarme einen ersten und einen dritten Statorarm (70a und 70c), die sich einander gegenüberliegen und eine im Wesentlichen übereinstimmende erste Längsachse (74) besitzen, und einen zweiten und einen vierten Statorarm (70b und 70d), die sich einander gegenüberliegen und eine im Wesentlichen übereinstimmende zweite Längsachse besitzen, umfassen, wobei die erste und die zweite Längsachse im Wesentlichen zueinander senkrecht sind.

10. Vorrichtung nach Anspruch 9, bei der das magnetische Element (50) vier Magnetringabschnitte (50a-d) umfasst, wovon jeder einen magnetischen Nordpol und einen magnetischen Südpol besitzt, wobei die vier Magnetabschnitte einen ersten Abschnitt (50a) und einen dritten Abschnitt (50c), die einander gegenüberliegen und dem ersten Statorarm (70a) bzw. dem dritten Statorarm (70c) entsprechen, und einen zweiten Abschnitt (50b) und einen vierten Abschnitt (50d), die einander gegenüberliegen und dem zweiten Statorarm (70b) bzw. dem vierten Statorarm (70d) entsprechen, umfassen, wobei jeder der magnetischen Abschnitte so orientiert ist, dass die magnetischen Nord- und Südpole auf benachbarten Abschnitten einander entgegengesetzt zugewandt sind.

11. Vorrichtung nach Anspruch 10, die ferner vier Stromspulen (60a-d) umfasst, die um jeden der vier Statorarme (70a-d) gewickelt sind, um eine erste Stromspule (60a) und eine dritte Stromspule (60c), die einander gegenüberliegen, sowie eine zweite Stromspule (60b) und eine vierte Stromspule (60d), die einander gegenüberliegen, zu schaffen.

12. Vorrichtung nach Anspruch 11, bei der die erste Stromspule (60a) und die dritte Stromspule (60c), die einander gegenüberliegen, in einer parallelen oder einer seriellen Stromschaltung miteinander verbunden sind und durch einen ersten Stromtreiber (400) angesteuert werden, und bei der die zweite Stromspule (60b) und die vierte Stromspule (60d), die einander gegenüberliegen, in einer parallelen oder einer seriellen Stromschaltung miteinander verbunden sind und durch einen zweiten Stromtreiber (400) angesteuert werden.

13. Vorrichtung nach Anspruch 1, bei der die äußere Lageroberfläche (11) eine im Wesentlichen zylindrische Oberfläche aufweist und bei der der innere Lagersitz (20) eine im Wesentlichen zylindrische Lagerlaufbahn aufweist und bei der die zylindrische Lageroberfläche und die zylindrische Lagerlaufbahn einen im Wesentlichen übereinstimmenden zylindrischen Radius besitzen.

14. Vorrichtung nach einem der Ansprüche 6-10, die ferner eine Strahlenbündelquelle (502) für die Erzeugung eines Strahlungsbündels (504), das so orientiert ist, dass es auf die Oberfläche (30) auffällt, aufweist, wobei das Strahlungsbündel (504) durch die Bewegung der Oberfläche (30) umgelenkt wird.

15. , Vorrichtung nach Anspruch 14, die ferner ein Linsenelement (508) aufweist, das in dem Weg des Strahlungsbündels (504) positioniert ist, um das Strahlungsbündel bei einer gewünschten Brennpunktposition zu fokussieren.

16. Vorrichtung nach Anspruch 14, die ferner eine elektronische Steuereinheit (510) aufweist, um eine Orientierung der Oberfläche (30) zu steuern, um das Strahlungsbündel (504) an gewünschte Positionen auf der Oberfläche (506) zu lenken und um entweder die Amplitude oder die Wellenlänge der Strahlungsquelle (504) zu modulieren.

17. Verfahren zum Orientieren einer Oberfläche (30), das umfasst:
- Vorsehen eines beweglichen Elements (10), das eine erste Seite (6) und eine gegenüberliegende zweite Seite (8) besitzt, wobei die erste Seite die zu orientierende Oberfläche (30) aufweist und die zweite Seite eine äußere Lageroberfläche (11) umfasst;
- Vorsehen eines festen Elements (40), das einen inneren Lagersitz (20) für die Aufnahme der äußeren Lageroberfläche (11) darin besitzt, derart, dass zwischen der äußeren Lageroberfläche und dem inneren Lagersitz ein Reibkoeffizient vorhanden ist;
- Befestigen eines magnetischen Elements (50), dem ein Magnetfeld zugeordnet ist, an dem beweglichen Element (10), damit es sich mit diesem bewegt; und
- Positionieren eines magnetisch permeablen Statorelements (70) in einer festen Position und Innerhalb des Magnetfeldes, so dass ein im Wesentlichen gleichmäßiger Luftspalt (73) das magnetische Element (50) und den Stator (70) über einem Bewegungsbereich des beweglichen Elements (10) trennt, derart, dass das Statorelement (70) und das magnetische Element (50) zwischen sich eine Zugkraft schaffen, die in Kombination mit dem Reibkoeffizienten eine Klemmkraft schafft, die ausreicht, um das bewegliche Element (10) in einer festen Orientierung zu halten.

18. Verfahren nach Anspruch 17, das ferner umfasst:
- Positionieren eines Stromtransportelements (60) in dem Magnetfeld, um ein Statormagnetfeld in dem Statorelement (70) zu induzieren, um mit dem Magnetfeld des magnetischen Elements (50) in Wechselwirkung zu treten.

19. Verfahren nach Anspruch 18, das ferner umfasst:
- Schicken eines Stroms durch das Stromtransportelement (60), um das Statormagnetfeld so zu steuern, dass es der Zugkraft entgegenwirkt.

20. Verfahren nach Anspruch 18, das ferner umfasst:
- Schicken eines Stroms durch das Stromtransportelement (60), um das Statormagnetfeld so zu steuern, dass es das bewegliche Element (10) in Bezug auf das feste Element (40) dreht.

21. Verfahren nach einem der Ansprüche 17-20, das ferner umfasst:
- Auswählen der Zugkraftgröße in Kombination mit der Auswahl des Reibkoeffizienten, derart, dass sich eine Klemmkraft ergibt, die ausreicht, um das bewegliche Element (10) in einer stationären Orientierung in Bezug auf das feste Element (40) zu halten, ohne dass irgendwelche anderen Kräfte ausgeübt werden.

22. Verfahren nach einem der Ansprüche 17-21, das ferner umfasst:
- Erfassen einer Position des beweglichen Elements (10) und
- Schaffen eines Sensorsignals, das eine momentane Orientierung der Oberfläche (30) repräsentiert.

23. Verfahren nach einem der Ansprüche 17-22, das ferner umfasst:
- Befestigen eines Elements an der Oberfläche (30); und
- Orientieren der Oberfläche (30), um das Element in gesteuerter Weise zu positionieren.

## Revendications

1. Dispositif pour orienter une surface (30) comportant :
- un élément mobile (10) ayant un premier côté (6) et un second côté opposé (8), ledit premier côté incluant la surface (30) à orienter et ledit second côté comportant une surface d'appui extérieure (11),
- un élément fixe (40) ayant une embase d'appui intérieure (20) pour recevoir la surface d'appui extérieure (11) dans celle-ci de sorte qu'il existe un coefficient de frottement entre la surface d'appui extérieure et l'embase d'appui intérieure,
**caractérisé en ce que** le dispositif comporte en outre :
- un élément magnétique (50) relié à l'élément mobile (10) et mobile avec celui-ci, l'élément magnétique produisant un champ magnétique.
- un élément formant stator magnétiquement perméable (70) relié de manière fixe à l'élément fixe (40) et positionné dans le champ magnétique de sorte qu'un entrefer sensiblement uniforme (73) sépare l'élément magnétique (50) et l'élément formant stator (70) sur une plage de mouvement de l'élément mobile (10), l'élément formant stator et l'élément magnétique créant une force de traction entre eux, la force de traction combinée avec le coefficient de frottement créant une force de serrage suffisante pour maintenir la surface (30) dans une orientation fixe.

2. Dispositif selon la revendication 1, comportant en outre :
- un élément parcouru par un courant (60) positionné dans le champ magnétique pour induire un champ magnétique de stator dans l'élément formant stator (70) pour interagir avec le champ magnétique de l'élément magnétique (50).

3. Dispositif selon la revendication 2, comportant également :
- un dispositif de commande de courant (400) pour délivrer un courant pouvant être commandé dans l'élément parcouru par un courant (60) pour induire le champ magnétique de stator.

4. Dispositif selon l'une quelconque des revendications ci-dessus dans lequel la force de traction combinée avec le coefficient de frottement crée une force de serrage suffisante pour maintenir l'élément mobile (10) dans une orientation stationnaire par rapport à l'élément fixe (40) sans qu'aucune autre force ne soit appliquée.

5. Dispositif selon l'une quelconque des revendications ci-dessus comportant en outre un capteur d'orientation pour délivrer un signal de capteur représentatif d'une orientation réelle de la surface (30).

6. Dispositif selon l'une quelconque des revendications ci-dessus dans lequel la surface (30) comporte un élément optique pour interagir avec un faisceau de rayonnement dirigé vers lui.

7. Dispositif selon l'une quelconque des revendications ci-dessus dans lequel la surface (30) comporte une surface réfléchissante pour réfléchir un faisceau de rayonnement dirigé vers elle.

8. Dispositif selon l'une quelconque des revendications ci-dessus dans lequel la surface d'appui extérieure (11) comporte une surface d'appui extérieure sensiblement sphérique et dans lequel l'embase d'appui intérieure (20) comporte un chemin de roulement à billes sensiblement sphérique et dans lequel la surface d'appui extérieure (11) et l'embase d'appui intérieure (20) ont un rayon sphérique sensiblement coïncident.

9. Dispositif selon l'une quelconque des revendications ci-dessus dans lequel l'élément formant stator (70) comporte un élément de stator en forme de croix, formé de manière sphérique pour créer un entrefer sensiblement uniforme (73) entourant le second côté accessible (8) de l'élément mobile (10), l'élément formant stator comportant en outre quatre bras de stator (70a à 70d) reliés ensemble par l'intermédiaire d'une partie centrale pour créer un trajet de flux magnétique entre des bras de stator adjacents (70a à 70d), les quatre bras de stator comportant des premier et troisième bras de stator opposés (70a et 70c) ayant un premier axe longitudinal sensiblement coïncident (74) et des deuxième et quatrième bras de stator opposés (70b et 70d) ayant un second axe longitudinal sensiblement coïncident, lesdits premier et second axes longitudinaux étant sensiblement perpendiculaires.

10. Dispositif selon la revendication 9 dans lequel l'élément magnétique (50) comporte quatre parties annulaires formant aimant (50a à 50d) ayant chacune un pôle magnétique nord et un pôle magnétique sud, les quatre parties magnétiques incluant des première (50a) et troisième (50c) parties opposées correspondant aux premier (70a) et troisième (70c) bras de stator, et des deuxième (50b) et quatrième (50d) parties opposées correspondant aux deuxième (70b) et quatrième (70d) bras de stator, et chacune des parties magnétiques est orientée en ayant les pôles magnétiques nord et sud dirigés de manière opposée sur des tronçons adjacents.

11. Dispositif selon la revendication 10 comportant en outre quatre bobines de courant (60a à 60d) enroulées autour de chacun des quatre bras de stator (70a à 70d) pour créer des première (60a) et troisième (60c) bobines de courant opposées et des deuxième (60b) et quatrième (60d) bobines de courant opposées.

12. Dispositif selon la revendication 11 dans lequel les première (60a) et troisième (60c) bobines de courant opposées sont reliées dans un circuit parmi un circuit de courant parallèle et un circuit de courant série et sont entraînées par un premier dispositif de commande de courant (400), et dans lequel les deuxième (60b) et quatrième (60d) bobines de courant opposées sont reliées dans un circuit parmi un circuit de courant parallèle et un circuit de courant série et sont entraînées par un second dispositif de commande de courant (400).

13. Dispositif selon la revendication 1 dans lequel la surface d'appui extérieure (11) comporte une surface sensiblement cylindrique et dans lequel l'embase d'appui intérieure (20) comporte un chemin de roulement à billes sensiblement cylindrique et dans lequel la surface d'appui cylindrique et le chemin de roulement à billes cylindrique ont un rayon cylindrique sensiblement coïncident.

14. Dispositif selon l'une quelconque des revendications 6 à 10 comportant en outre une source de faisceau de rayonnement (502) pour produire un faisceau de rayonnement (504) dirigé de manière incidente vers la surface (30) et dans lequel le faisceau de rayonnement (504) est redirigé par un déplacement de la surface (30).

15. Dispositif selon la revendication 14 comportant également un élément formant lentille (508) positionné dans le trajet du faisceau de rayonnement (504) pour concentrer le faisceau de rayonnement sur une position focale voulue.

16. Dispositif selon la revendication 14 comportant de plus une commande électronique (510) pour commander une orientation de la surface (30) pour diriger le faisceau de rayonnement (504) vers des positions voulues sur la surface (506) et pour moduler un paramètre parmi une amplitude et une longueur d'onde de la source de rayonnement (504).

17. Procédé pour orienter une surface (30) comportant les étapes consistant à :
- agencer un élément mobile (10) ayant un premier côté (6) et un second côté opposé (8), ledit premier côté incluant la surface (30) à orienter et ledit second côté comportant une surface d'appui extérieure (11),
- agencer un élément fixe (40) ayant une embase d'appui intérieure (20) pour recevoir la surface d'appui extérieure (11) dans celle-ci de sorte qu'il existe un coefficient de frottement entre la surface d'appui extérieure et l'embase d'appui intérieure,
- relier un élément magnétique (50) ayant un champ magnétique associé à celui-ci, à l'élément mobile (10) pour un déplacement avec celui-ci, et
- positionner un élément formant stator magnétiquement perméable (70) dans une position fixe et à l'intérieur du champ magnétique de sorte qu'un entrefer sensiblement uniforme (73) sépare l'élément magnétique (50) et l'élément formant stator (70) sur une plage de mouvement de l'élément mobile (10), de sorte que l'élément formant stator (70) et l'élément magnétique (50) créent une force de traction entre eux, la force de traction combinée avec le coefficient de frottement créant une force de serrage suffisante pour maintenir l'élément mobile (10) dans une orientation fixe.

18. Procédé selon la revendication 17 comportant en outre l'étape consistant à :
- positionner un élément parcouru par un courant (60) dans le champ magnétique pour induire un champ magnétique de stator dans l'élément formant stator (70) pour interagir avec le champ magnétique de l'élément magnétique (50).

19. Procédé selon la revendication 18 comportant en outre l'étape consistant à :
- faire circuler un courant à travers l'élément parcouru par un courant (60) pour commander le champ magnétique de stator afin de faire opposition à la force de traction.

20. Procédé selon la revendication 18, comportant en outre l'étape consistant à :
- faire circuler un courant à travers l'élément parcouru par un courant (60) pour commander le champ magnétique de stator afin de faire tourner l'élément mobile (10) par rapport à l'élément fixe (40).

21. Procédé selon l'une quelconque des revendications 17 à 20, comportant en outre l'étape consistant à :
- sélectionner l'amplitude de la force de traction tout en sélectionnant le coefficient de frottement de sorte qu'une force de serrage suffisante pour maintenir l'élément mobile (10) dans une orientation stationnaire par rapport à l'élément fixe (40) est obtenue sans qu'aucune autre force ne soit appliquée.

22. Procédé selon l'une quelconque des revendications 17 à 21, comportant en outre les étapes consistant à :
- détecter une position de l'élément mobile (10), et
- produire un signal de capteur représentatif d'une orientation réelle de la surface (30).

23. Procédé selon l'une quelconque des revendications 17 à 22, comportant en outre les étapes consistant à :
- relier un élément à la surface (30), et
- orienter la surface (30) pour positionner l'élément de manière commandée.
